(19)

Europäisches
Patentamt
European
Patent Office
Office européen
des brevets

(11) **EP 3 667 618 A1**

(12) # EUROPEAN PATENT APPLICATION

(43) Date of publication:
**17.06.2020 Bulletin 2020/25**

(51) Int Cl.:
***G06T 11/00*** *(2006.01)*

(21) Application number: **18211630.1**

(22) Date of filing: **11.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **BERGNER, Frank**
**5656 AE Eindhoven (NL)**

• **FREIMAN, Mordechay Pinchas**
**5656 AE Eindhoven (NL)**
• **BRENDEL, Bernhard Johannes**
**5656 AE Eindhoven (NL)**
• **GOSHEN, Liran**
**5656 AE Eindhoven (NL)**
• **GRASS, Michael**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **DEEP PARTIAL-ANGLE CORONARY RESTORATION**

(57)     An image processing system (IPS) and related method. The system comprises an input interface (IN) for receiving a set of one or more projection images with at least one motion corrupted projection image excluded. A reconstructor (RECON) reconstructs a first image from the set. A pre-trained machine learning component (MLC) estimates a second image from the first image. Motion corruption artifacts due to patient motion can be reduced.

FIG. 1

EP 3 667 618 A1

**Description**

FIELD OF THE INVENTION

The invention relates to a system for image processing, to a system for training a machine learning component for image processing, to a method for image processing, to a method for training a machine learning component for image processing, to methods of generating training data for training of a machine learning component, to a computer program element, and to a computer readable medium.

BACKGROUND OF THE INVENTION

Limited-angle computed tomography can be used to reconstruct 3D axial images without requiring a full-coverage of the projection domain, but just a view from a limited range. While limited-angle reconstruction has the potential to result in images that are more robust to patient motion in cardiac CT (computed tomography) scans, the missing data in the projection domain can result in intensity inhomogeneity and streaking artifacts in the image domain. Therefore, limited-angle reconstruction may not be used in a clinical setting.

Improving the quality of limited angle reconstructed images has the potential to enable a more robust Coronary computed tomography angiography (CCTA), a rapidly evolving technique to rule-out coronary artery disease (CAD) which accounts for 8.14 million deaths in 2013 due to its high negative predictive value as reported in C. J. L. Murray and GBD 2015 Mortality and Causes of Death Collaborators, "Global, regional, and national age-sex specific all-cause and cause-specific mortality for 240 causes of death, 1990-2013: a systematic analysis for the Global Burden of Disease Study 2013 ", The Lancet, vol. 385, no. 9963, pp. 117-171, 2015.

CCTA acquisition is challenging, mainly due to cardiac motion. Several approaches exist to reduce the impact of cardiac motion on the CCTA images:

1) Reduce heart-rate and acquire data at the part of the cardiac cycle with the smallest motion (usually 75%), using ECG-gated scan. For example, SCCT guidelines recommend performing CCTA with heart rates below 60 bpm which can be achieved by administrating the patient with Beta-blockers;
2) Use fast gantry rotation time; or
3) Apply image-processing motion-correction algorithms to reduce motion artefacts.

However, these solutions require specialized hardware and medications which are not always available or are expensive. Moreover, even when applied, may yield sub-optimal image quality especially in cases where image acquisition protocol does not adhere the clinical recommendation for various reasons. Sub-optimal results may affect clinical evaluation of the image data and image-based functional tests, such as CT-FFR (Fractional flow reserve-computed tomography).

SUMMARY OF THE INVENTION

There may therefore be a need for alternative systems or methods to address some or all of the above mentioned shortcomings in relation to the imaging of moving objects.

The object of the present invention is solved by the subject matter of the independent claims where further embodiments are incorporated in the dependent claims. It should be noted that the following described aspect of the invention equally applies to the system for training the machine learning component for image processing, to the method for image processing, to the method for training the machine learning component for image processing, to the methods of generating training data for training of the machine learning component, to the computer program element, and to the computer readable medium.

According to a first aspect of the invention there is provided a (computer-implemented) image processing system, comprising:

an input interface for receiving a set of one or more projection images with at least one motion corrupted projection image excluded;
a reconstructor configured to reconstruct a first image from the set; and
a pre-trained machine learning component configured to estimate a second image from the first image.

The motion corruption is due to motion of an imaged object, in particular a region of interest of a patient, such as the heart.

In embodiments, the reconstructor acts on fewer projection images than required for a full reconstruction and produces a limited-angle reconstruction as the first image. From this first image then, the pre-trained machine learning ("ML") component computes an estimate of the full reconstruction as the second image, with fewer motion related artifacts.

According to one embodiment, the system comprises an image combiner configured to combine one or more portions from the second image with one or more portions from an image reconstructable from a super-set comprising the set and the at least one excluded projection image, to obtain a combined image. The image reconstructable from the super-set includes in particular the full reconstruction. The combiner hence helps to form the combined as image as the "best of both worlds". Portions that are not motion corrupted are taken from the full reconstruction, whilst portions that are motion corrupted are taken from the second image as estimated by the machine learning component as this image includes fewer motion related artifacts. A blur measure or other decision logic may be used to decide which portion is motion corrupted.

According to one embodiment, the reconstructor to produce the first image may run a specially tuned limited angle tomography algorithm, that may include additional processing steps or components such as regularization, configured to better cope with the lack of spatial information due to the reduced set of projection images.

According to one embodiment, the system comprises a visualizer module configured to effect displaying, on a display device, the second image or the combined image.

According to one embodiment, the machine learning component is based on a pre-trained neural network, but other ML models may also be used.

According to one embodiment, the system comprises an image selector module configured to select the first set of projection images from the, or a, super-set of projection images, based on an indication for motion corruption. The indication may be provided in terms of a measurements obtained by a probe from the patient, such as an ECG (electrocardiogram) signal. Alternatively, image processing techniques may be used to establish the amount of motion corruption, e.g., based on a blur measure, edge prominence, etc.

In another aspect there is provided an image processing method, comprising:

receiving a set of one or more projection images with at least one motion corrupted projection image excluded,
reconstructing a first image from the set; and
operating a machine learning algorithm to estimate a second image from the first image.

According to one embodiment, the method comprises combining one or more portions from the second image with one or more portions from an image reconstructable from a super-set comprising the set and the at least one excluded projection image, to obtain a combined image. In particular, the image may be a full reconstruction image using the full set of projection, including those earlier excluded. By combining image information from the two images, portions of the full reconstruction image that are not affected by motion corruption may be retained.

According to one embodiment, the reconstructing step is based on a limited angle tomography algorithm.

According to one embodiment, the method comprises effecting displaying, on a display device, of the second image or the combined image.

According to one embodiment, the machine learning algorithm is based on a pre-trained neural network.

In embodiments, the proposed system and method operate, in deployment, solely in the image domain. No recourse to the projection domain is required during deployment. In particular, for periodic motions, such as in cardiac imaging, imagery for a single phase is sufficient for the proposed system and method. Imagery recording multiple phases are not required in the proposed system.

In sum and in embodiments, what is proposed herein is a new approach to reduce image artifacts associated with partial angle tomography based on statistical modelling of the partial angle tomography artifacts appearance, in particular in coronary CTA data. Our approach provides an improved quality view of the coronary arteries by first excluding projections that are affected by motion combined with partial angle tomography reconstruction and finally reduce the associated image artifacts using a statistical model.

The proposed system and method enable an improved noninvasive, accurate, assessment of CAD. The proposed method provides high-quality images of the coronaries that are not subject to motion artifacts with reduced partial-angle reconstruction artifacts.

In other words, the machine learning component used in the proposed manner allows motion artifacts reduced limited-angle reconstruction. The proposed system hence makes it possible using limited-angle reconstruction in a clinical setting, for instance for diagnostic or therapeutic purposes. The adverse effect of the missing data in the projection domain, otherwise causing the mentioned intensity inhomogeneity and/or streaking artifacts in the image domain, can be reduced or entirely eliminated.

In another aspect there is provided a method for training a machine learning component so that the component, when so trained, is capable of estimating a second image from a first image, the first image reconstructed from a set of at least one projection images with at least one motion corrupted projection excluded.

In another aspect there is provided a method for training a machine learning component Method, wherein the method is based on improving an objective function in an optimization procedure, the method comprising:

applying training data to a machine learning component prototype to obtain training output data; and
mapping by an information extractor function the training output data to one or more values, wherein the objective function is applied to said one or more values.

According to one embodiment, the one or more values represent a clinical objective in relation to the second image. The clinical objective, or goal, may include medical observables, such as image-based measurements that relate to the goal. In embodiments the measurements may include stenosis measurements. The mapping operation helps ensure that the objective function (such as a loss function), and hence the optimization, are guided to aspects or portions of the imagery that matter for the clinical goal, whilst ignoring, or at least attaching less importance, to other aspects or parts of the processed imagery.

In another aspect there is provided a system configured to train a machine learning component as per the training method of any one of above mentioned aspects or embodiments.

In another aspect there is provided a method of generating training data for a machine-learning component. The method comprises associating a full reconstruction image of an object based on a first set of projection images, with a limited-angle reconstruction of the same object based on a subset of said first set. In embodiments, a computerized system may be used, such as a scripting tool run on a computing platform, to access full reconstruction images of patients held in image repositories, databases and the like.

Specifically, and in embodiments, for a given patient, a random or deterministic sub-selection is then made from the respective full set of projection images that were used to compute the respective full reconstruction image. A limited angle reconstruction is then performed from the sub-selection to obtain the limited angle reconstruction image. The full reconstruction image is then associated with the limited angle reconstruction image to from a pair of training data. The association includes in particular using the pair as training input image and target image to train a machine leaning component, in particular a machine leaning component as mentioned above in aspects or embodiments.

In another aspect there is provided a method of generating training data for a machine-learning component. The method comprises:

receiving at least two sets of projection data associated with respective angular ranges, one range being a subset of the other (superset) range;
centering the two sets of projection data on a common, predefined reference projection angle, to so obtain centered projection data sets;
reconstructing respective images from the two centered projection data sets; and
providing the respective images as training data. The projection associated with the larger range may have been acquired by the tomographic imaging apparatus (e.g., CT) over a full range, whilst the projection data associated with the sub-range may have been obtained by selection from the full range projection data, e.g. through vital sign gating or any other mechanism.

The image that is reconstructed from the subset of projection images is the training input and the other image reconstructed from the larger, super set, is the target. The two images thus form an associated pair of training data. A plurality of such pairs (preferably from data of different patients) may be generated, and preferably for some or each such pairs the same common reference projection angle is used.

Said differently, there is provided a method of generating training data for a machine-learning component, comprising:

receiving at least two sets of projection data (for different patients) previously acquired over respective angular ranges; and
reconstructing from the two sets respective images having artifacts aligned along a common axis or situated at the same angular positions in the image plane.

The proposed method of generating training data addresses a problem in particular in gated reconstructions, where the start angle of the CT acquisition is arbitrary as the scanner rotates continuously and enables the X-ray beam once the correct gating point, e.g. time point in the heart cycle for ECG gating, is reached. The limited angle artifacts incurred have, therefore, also arbitrary directions. This may require a large amount of training data in order to generalize well for all directions. Thanks to the proposed centering, the artifact structure has become spatially invariant and additionally also invariant over different samples in the training data.

The proposed preprocessing of historical data may be used with particular benefit in neural networks, such as CNN (convolutional neural networks). In CNN for instance, convolution filters in the individual layers can therefore be learned to better "follow" the direction of the missing rays of the limited angle reconstruction. It was observed, that using the commonly centered training data results in a machine learning models that yield good estimates of the limited angle artifacts or, equivalently, of the full reconstruction. Remarkably, no tuning was performed on the network for this application.

In another aspect there is provided at least one computer program element, which, when being executed by at least one processing unit, is adapted to cause the processing unit to perform a method as per any one of the above mentioned aspects or embodiments.

In embodiments, the processing unit is of a multi-core design and/or configured for parallel computing.

In another aspect there is provided at least one computer readable medium having stored thereon the program element.

Definitions

"*user*" relates to a person, such as medical personnel or other, operating the imaging apparatus or overseeing the imaging procedure. In other words, the user is in general not the patient.

"*object*" is used herein in the general sense to include animate "objects" such as a human or animal patient, or anatomic parts thereof but also includes inanimate objects such as an item of baggage in security checks or a product in non-destructive testing. However, the proposed system will be discussed herein with main reference to the medical field, so we will be referring to the "object" as "the patient" and the location of interest ROI, being a particular anatomy or group of anatomies of the patient PAT.

"*motion corrupted*" may refer to a single image or a group of images. In embodiments, for a single image, the information recorded therein is motion corrupted if the image was acquired whilst the object, or at least a portion thereof, was under motion. In addition or in the alternative, and in some embodiments, an image is motion corrupted relative to at least one other image, if the two images were acquired when the object, or portion(s) thereof, was at different respective locations, the object undergoing motion in between the two respective acquisition times. These definitions apply to both, ID (image domain) and PD (projection domain) imagery.

In general, the "*machine learning component*" is a computerized arrangement that implements a machine learning ("ML") algorithm that is configured to perform a task. In an ML algorithm, task performance improves measurably after having provided the arrangement with more training data. The task's performance may be measured by objective tests when feeding the system with test data. The task's performance may be defined as requiring a maximum certain error rate to be achieved for the given test data. See T. M. Mitchell, "Machine Learning", page 2, section 1.1, McGraw-Hill, 1997.

BRIEF DESCRIPTION OF THE DRAWINGS

Exemplary embodiments of the invention will now be described with reference to the following drawings wherein:

Figure 1 shows a schematic block diagram of an imaging arrangement;
Figure 2 illustrates limited angle tomography;
Figure 3 shows a schematic block diagram of an image processing system;
Figure 4 shows a training system for training a machine learning module;
Figure 5 shows a flow chart of an image processing method;
Figure 6 shows a flow chart of a method of training a machine learning module;
Figure 7 illustrates image artifacts in limited angle tomography; and
Figure 8 shows a flow chart of a method of generating training data for training a machine learning module.

DETAILED DESCRIPTION OF EMBODIMENTS

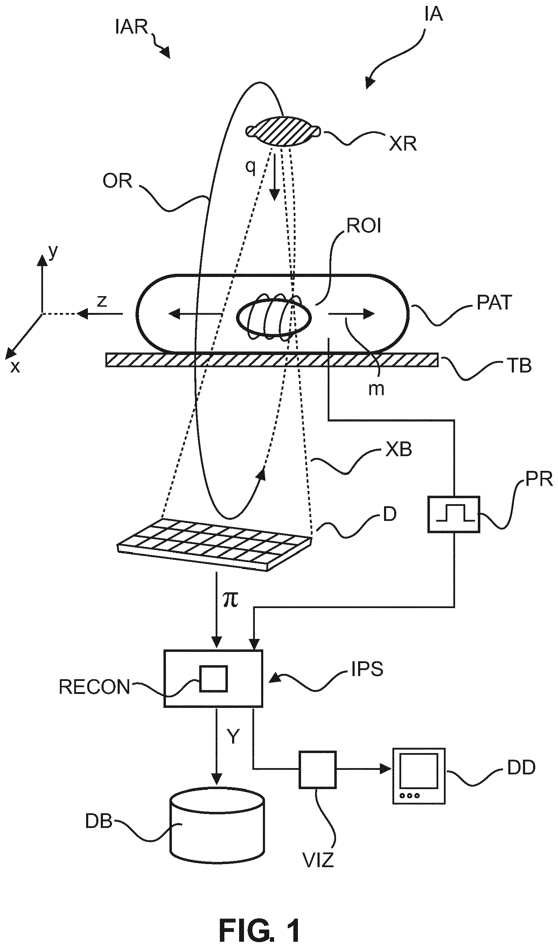

With reference to Figure 1 there is shown an imaging arrangement IAR envisaged herein in embodiments.

The imaging arrangement IAR includes an imaging apparatus IA that is configured to acquire images of an object PAT such as a human or animal patient.

The images acquired by the imaging apparatus, or imagery derivable therefrom, may be processed by a computerized image processing system IPS to produce enhanced imagery with motion artifacts reduced as explained in more detail below.

The enhanced imagery may be stored in memory, such as in a data base system, or may be visualized by a visualizer VIS on a display device DD, or may be otherwise processed.

The imaging apparatus IA ("imager") envisaged herein is in particular of the tomographic type. In this type of imaging, projection images are acquired by the imager of a region of interest ROI of patient PAT. The projection images may then be re-constructed by a re-constructor RECON into axial or cross-sectional images or "slices". The axial imagery may reveal information about internal structures of the ROI to inform examination and diagnosis by clinicians in line with clinical goals or objectives to be achieved. ROIs envisage herein include the patient's coronaries or parts thereof, the liver or any other organ or anatomy of interest. Particularly envisaged herein are x-ray based imagers, such as computed tomography (CT) scanners, or C-arm/U-arm imagers. The imager IA includes an X-ray source XR and an X-ray sensitive detector D. The imager IA may be configured for energy integrating imaging or for spectral, energy discriminating, imaging. Accordingly, the detector D may be of the energy integrating-type, or of the energy discriminating type, such as a photon-counting detector.

During image acquisition, patient PAT resides in an examination region between the source XR and detector D. In embodiments, the source X-ray moves in an imaging orbit OR around an imaging axis Z. The imaging axis passes through the ROI. Preferably, the patient's longitudinal axis is aligned with the imaging axis Z, but other arrangements and geometries are also envisaged. A full revolution of the source XR around the ROI is not necessarily required for a full scan which can already be achieved if the orbit OR is an arc subtending a rotation angle of at least 180° around the ROI. During the rotation, the source XR emanates an X-ray beam XB and irradiates the ROI. During the rotation, the projection images are acquired at the detector D from different directions $q$. The x-ray beam XB passes through the patient PAT, particularly through the region of interest ROI. The x-ray beam interacts with matter in the region of interest. The interaction causes the beam XB to be modified. Modified radiation emerges at the far end of the patient and then impinges on the x-ray sensitive detector D. Circuitry in the detector converts the modified radiation into electrical signals. The electrical signals may then be amplified or otherwise conditioned and are then digitized to obtain the (digital) projection imagery $\pi$ which may then be reconstructed into the axial imagery by reconstructor.

The re-constructor RECON is a computerized module that runs a reconstruction algorithm, such as FBP, Fourier-domain based, ART, iterative, machine learning based, or other. The re-constructor RECON module may be arranged in hardware or software. The re-constructor RECON transforms the projection images acquired in the detector domain D into axial or sectional imagery in image domain. Image domain occupies the portion of space in the examination region where the patient resides during the imaging. In contrast, the projection domain is located in the plane of the X-ray detector D. In the image domain, the re-constructed imagery is defined in cross sectional planes parallel to the plane of the orbit OR and perpendicular to the imaging axis Z. By advancing the support table TB on which patient PAT resides during imaging, different axial images in different cross sectional planes may be acquired that together form a 3D image volume, a 3D image representation of the ROI. Different spatial views on and through the volume can be realized by using a reformatting tool (not shown). The reformatting tool computes views in planes perpendicular to a view axis other than the Z axis. The view axis can be chosen by the user. Views on curved surfaces may also be computed by the reformatting tool. After reformatting, visualizer VIZ may be used to have the (possibly) reformatted slice imagery displayed on the display device DD.

Broadly, the image processing system IPS is configured to reduce, or entirely eliminate, motion artifacts in the reconstructed axial imagery X, caused by motion $m$ of the patient PAT, or of at least points or portions of the region of interest ROI therein, during acquisition of the projection images $\pi$. ROI motion $m$ may include any one or more of deformation, rotation, translation. In particular, but not necessarily in all embodiments, there is periodic motion of the ROI. Periodic motion may be conceptualized as transitions between certain physical states the ROI assumes. An example for such ROIs is the periodic contraction and expansion of the human or mammal heart or inflation and deflation of lungs, all envisaged herein in embodiments.

More specifically, one application scenario particularly envisaged herein includes computed tomography angiography (CTA). More particularly, CTA of the human or animal heart is envisaged, known as coronary CTA (CCTA). In particular, cardiac imaging has been found to be prone to motion induced artifacts in particular in the reconstructed axial imagery. The motion of the heart for instance consists of periodic contraction and relaxation of the heart muscle, whilst remaining stationary for short periods of time, the motion being induced by electricity generating cells embedded in the heart muscle.

Briefly, in CCTA, a contrast agent is administered to the patient PAT to enhance image contrast for soft tissue. In cardiac imaging it is in particular the coronaries enmeshing the heart muscle that are of interest. Stenosis for instance or other inflictions may be examined based on contrast enhanced reconstructed imagery. Vessels of the heart, that is, the cardiac arteries and/or veins, constitute soft tissue and are, as such, not visible in standard x-ray imagery due to very weak X-ray absorption. Contrast can be enhanced by the administered contrast agent that accumulates in the vessels to so confer contrast in the acquired projection imagery and hence in the axial imagery re-constructible therefrom.

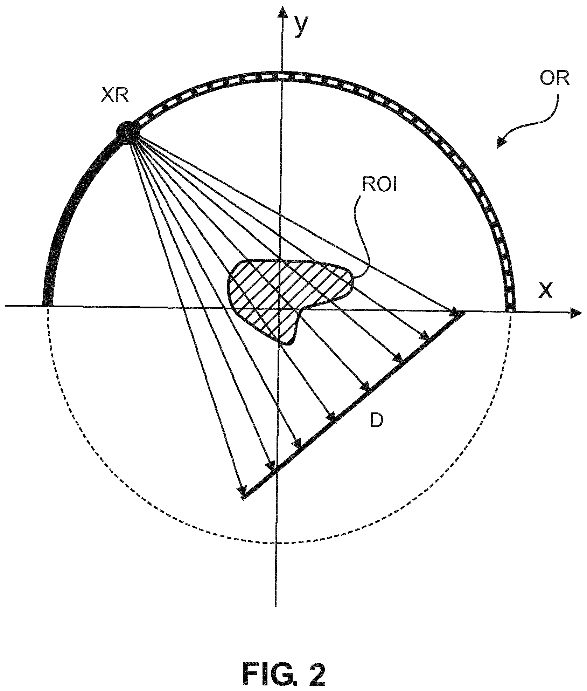

The image processing system IPS is configured to reduce or entirely eliminate those motion artifacts. Broadly, what is proposed herein, is to use the re-constructor module RECON configured to run a limited angle ("LA") reconstruction ("RECON_L"). The concept of limited angle reconstruction is illustrated in Figure 2. A limited angle reconstruction algorithm may include additional processing such as regularization to reduce artifacts due to the lack of spatial information. In other embodiments however, such additional processing is not envisaged. As mentioned above, reconstruction algorithms for RECON L envisaged herein include any of FBP (forward-backward-projection), ART, iterative, Fourier-domain based, or other.

Figure 2 confers a view along the imaging axis Z on the imaging domain for a given slice image plane. For full reconstruction, projection images from different directions on an arc subtending at least $180^0$ are required. Such a full view orbit OR is shown in solid line. In contrast, an exemplary limited angle orbit OR of less than $180°$ is shown in dotted line.

Limited angle reconstruction, uses projection imagery from directions $q$ that subtend an arc of less than $180^0$ around the ROI. Using, in the limited angle reconstruction, fewer projection images than in the full reconstruction causes a lack of spatial information and this, in itself, may lead to certain image artifacts.

In other words, there are two potential causes for image artifacts in image domain: one is the described motion of the ROI and another is the lack of spatial "depth" information due to a limited angle orbit OR.

With continued reference to Fig. 2, it will be appreciated that the limited angle reconstruction algorithm does not necessarily rely on a contiguous sub-arc. It is sufficient for the present definition of limited angle construction to rely on a sub-set from the originally collected set in the scan, whether or not the acquisition locations on the arc are arranged contiguously (ignoring the incremental step width) along the scan arc OR. In other words, arrangements of arcs OR with gaps in between sub-arcs are also envisaged herein and indeed this may be the case during cardiac imaging where the selected projection imagery corresponds to stationary cardiac phases and hence do not necessarily form a contiguous sub-arc (in dotted line), unlike the situation schematically suggested in Figure 2. However, the sum of the angular coverage of the sub-arcs is less than $180°$ in the limited-angle orbit.

Broadly, the proposed image processer IPS implements a two-stage approach to deal with both sources of image artifacts, using a limited-angle ("LA") image reconstruction algorithm in combination with machine learning. Specifically, in one stage, the motion artifacts are reduced by selecting only those projection images that were not corrupted by motion during acquisition or where the motion corruption is at least negligible. The removal of the motion corrupted projection images may be achieved by using an image selector module ISM, on which more further below. This reduced set of projection imagery is then passed through the limited angle re-constructor RECON L. The output of the first stage of reconstruction however may be encumbered by artifacts due to the lack of spatial information. This type of artifacts is combated in the second stage by using a statistical model and/or a pre-trained machine learning component MLC to estimate, from the limited-angle construction, an estimate for the full re-construction. The machine learning component MLC as used herein is pre-trained by training data that includes pairs of associated full view and limited angle reconstructions or the same region. The required training imagery can be collected and assembled from existing historical imagery. After training, the MLC is then able to analyze new imagery, not previously processed, to make accurate estimations.

In embodiments, the image selector component ISM may operate on measurements of certain motion correlatable indicia to identify and remove motion corrupted projection imagery. In embodiments, an individual projection image is so removed if it is in itself corrupted such as blurred due to the motion of the ROI. In addition or instead, the removal of projection images is done to ensure that the remaining set of projection imagery is not motion corrupted, that is, the remaining set is in itself consistent in respect to the motion state of the ROI. Put differently, the remaining projection imagery set represents the ROI substantially in the same state or location.

The ISM may comprise an interface to receive measurements taken from the patient PAT by a probe PR. The ISM may include logic to analyze the measurements to identify the images to be removed that are motion corrupted. Exemplary embodiments for the said indicia include, but are not limited to, vital sign measurements, such as an ECG signal or pulse measurements. Accordingly, in embodiments, the ISM may be interfaced with ECG measurement equipment, with electrodes PR attached to the patient's PAT chest in a known manner. In addition or instead, a high-sensitive digital image sensor PR may be used that can pick up the sequence of subtle periodic "blushes" (not visible to the unaided human eye) on the patient's skin caused by periodic blood motion driven in synchrony with cardiac activity. Yet, as another option envisaged herein, the periodic blood motion may also cause a sequence of slight heat flares on the skin surface which may be picked up by an infrared image sensor PR. In particular in imaging contexts other than cardiac, other vital signs may be more relevant such a breathing cycle measurements in liver imaging.

The captured motion indicia allow filtering out, from the total set of projection imagery, the ones that are motion corrupted, in particular, that are not consistent with a chosen one or more reference projection images that represent(s) the same motion state of the ROI. The respective motion state indicia measurement are time series that can be correlated to time stamps of the projection imagery to implement the filtering.

It should be understood however that not all embodiments of the image selector ISM are necessarily tied to measurement time series. Purely theoretical modeling to effect the motion corruption filtering is also envisaged herein. The motion consistency condition for the filtering may be based instead on image processing techniques such as optical flow techniques or on principles of image registration or other.

Alternatively or addition, suitable image-based measures of blur may be used such as based on spatial frequency content, sharpness of edges and similar. In this embodiment, projection images are removed if they are deemed too blurry, based on comparing the blur measure against a threshold, or similar. The blur measures may be evaluated image-neighborhood-wise, by defining small neighborhoods (circles, squares, etc.) and evaluate the blur measures there and then proceed to cover all or relevant parts of the images. A pixelwise evaluation may also be envisaged in embodiments.

In other embodiments, the one or more reference images, relative to which motion corruption of other images is defined, may be chosen randomly, automatically or are user defined. For example, in ECG embodiments, the user may specify with a user interface which heart phase, systolic or diastolic, is of interest. The chosen phase is then mapped to a certain projection image that corresponds to the chosen phase, and this image is then the reference image against which motion corruption will be measured when the ISM filters the remaining images to establish the reduced set.

Alternatively, the measurement from the probe may be used to perform gated-imaging where projection images are acquired only when the ROI is in a certain state, posture, location, etc. In other words, in gated-imaging the filtering is done implicitly as compared to above described embodiments where the filtering is done explicitly post-acquisition. In this embodiment, the ISM comprises gating logic in communication with the imager IA.

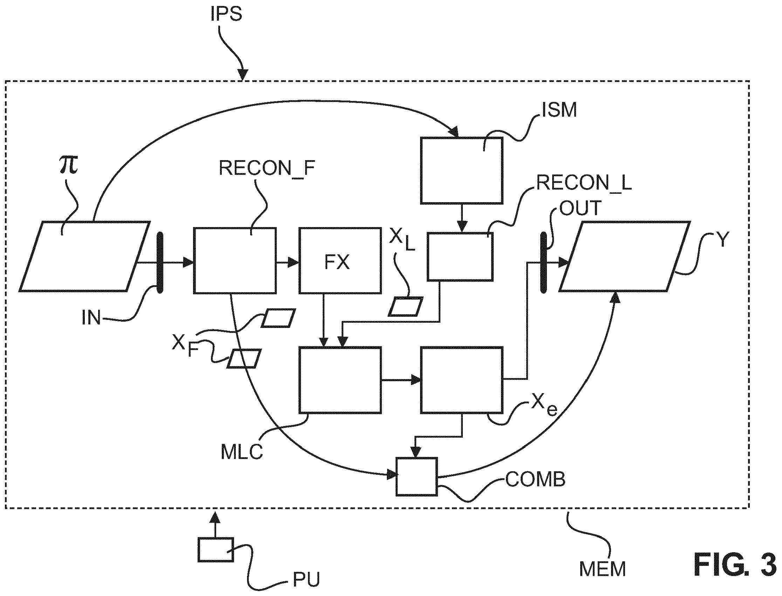

Further useful and novel features will now be explained with continued reference to Figure 3 which shows a schematic block diagram of the image processing system IPS as envisaged herein in embodiments.

The IPS may be arranged in hardware or software. Some or all components may reside in a central memory MEM. Some or all the components may also be held in a distributed memory. The image processing system IPS may be implemented by a suitably arranged computational processing unit PU. If a neural network ("NN") architecture is used for the machine learning component, as is indeed envisaged herein in embodiments, advantageously a multi-core processor PU and/or one that is configured for parallel computing may be used such as GPUs or TPUs.

Explaining now in more detail operation of the image processor with continued reference to Fig 3, projection imagery $\pi$, preferably acquired during a full scan orbit (as explained in Fig 2) of the ROI, is received at an input interface IN. The projection data may have been acquired by a conventional, polychromatic energy integrating imager IA. Alternatively, the imager IA is configured for spectral imaging, including, but not limited to, having a dual-layer detector sub-system D that separates the x-ray flux at the detector into two levels of energy. Alternatively, a photon-counting detector sub-system is used. In case of spectral imaging capabilities, the projection data and the imagery reconstructable therefrom, may be spectrally processed to better adapt contrast to certain desired materials, such as contrast agent.

Optionally, in addition to the projection image data $\pi$, there is also contextual data received for processing with the image data. This contextual data may include for instance, imaging parameters, or optional motion indicia data, provided by suitable probe PR arrangement as explained above. In general, the contextual data allows personalization, to help guide the MLC to make more accurate and more robust estimations.

As mentioned, because of the ROI motion present during the acquisition of the full projection data set $\pi$ is expected to be corrupted by motion artifacts. To address this, image selector module ISM filters out motion corrupted projection images and produces, based for instance on ECG signal or other clues, a sub-set of the originally used projection images $\pi$. Alternatively, gated-imaging is performed. The reduced set of projection images so obtained is not motion corrupted and in particular is consistent with a given state, posture, position etc., of the ROI.

The sub-selection of motion consistent projection imagery $\pi' \subset \pi$ is then passed on to re-constructor RECON_L that implements the limited angle re-construction algorithm. The LA re-constructor RECON L produces a limited angle re-construction $X_L$ image (referred to herein simply as "$X_L$" or as "the reconstruction $X_L$") which may itself possible be marred by artifacts due to the lack of spatial information as described above.

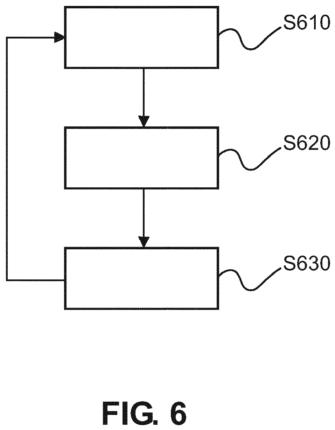

$X_L$ is then passed through the, suitably pre-trained (more on which below at Fig 6), machine learning component MLC which operates to estimate an estimate $X_e$ of how a full re-construction may look like. In embodiments, the MLC takes as input not only the $X_L$ but preferably, in addition, the projection imagery $\pi'$ or an enlarged set of projection images, in particular, and preferably, the full set of projections $\pi$. Optionally, the motion indicia used to select the sub-set $\pi'$, such as the ECG measurement series, may also be provided as additional input. In other words, in embodiments, the MLC processes during deployment $X_L$, $\pi$ (and possibly the indicia) together to produce the estimated reconstruction $X_e$. At least this estimate $X_e$ is then output at output port OUT and may be passed to a visualizer VIZ. The visualizer effects display on the display device of the estimated re-construction $X_e$.

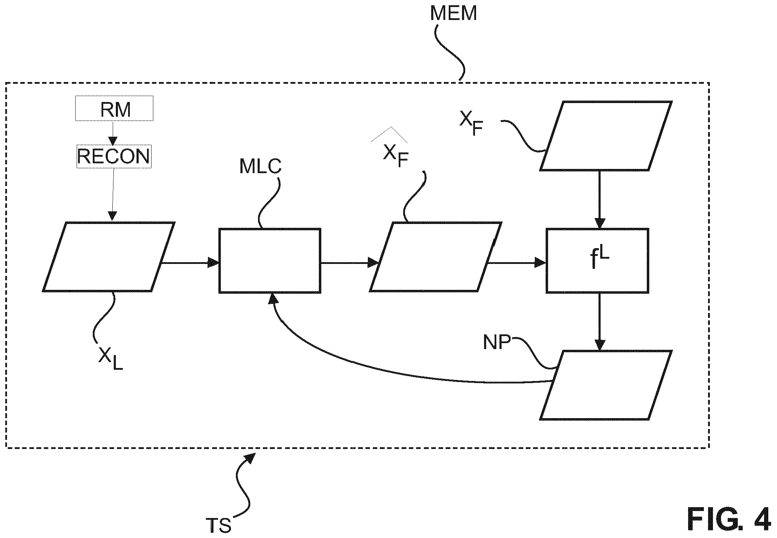

The machine learning component MLC may be arranged in a neural-network architecture such as a convolutional neural network. Alternatively still, support vector machines, decision trees, or other machine learning techniques are envisaged that can be trained from historic training data. Statistic modeling enhanced by training data may also be used. Learning aspects will be discussed further below at Figs 4,6.

With continued reference to Fig 3, in embodiments, a full re-construction is still performed by means of a full view re-constructor module RECON_F to produce a fully reconstructed images $X_F$, based on the, preferably complete, set of the original projection images $\pi$. The full reconstructor functionality RECON_F and the limited-angle reconstruction RECON_L may be carried out by one the same module, referred to in Fig 1 generically as "RECON". In this embodiment then, the limited angle functionality is simply implemented by using fewer projection imager than in the full reconstruction. But in both cases, the same reconstruction algorithm may be used. In an alternative embodiment, the functionalities may differ and may be arranged as separate modules or still as a single module but switchable into the two functionalities. For instance, in embodiments the limited angle reconstructor RECON L may include additional regularization components to better cope with the lack of spatial information, whereas in the full reconstruction functionality RECON_F no such regularization is used.

In embodiments there is a combiner COMB that combines the estimate of the full re-construction $X_e$ with the original full re-construction $X_F$ to produce a combined image Y which is then output at output port OUT and displayed either instead or in addition together with the estimate $X_e$.

Alternatively, it is only the so combined image *Y* that is displayed on the display device. A user interface may be provided that allows the user to select for display each one or each combination of all the imagery produced herein, including the $X_F$, the $X_L$, the $X_e$, and Y, in any sub-combination. A multi-pane graphics display may be produced by the visualizer VIZ to organize the displayed imagery on the available screen real-estate on one or more display devices. Preferably, the combiner COMB combines one or more portions of the $X_e$ with one or more portions of the $X_F$ to form the combined image *Y*. More specifically, motion corrupted portions in the $X_F$ are dropped and supplanted by corresponding portions from the full re-construction estimate $X_e$. This can be done by defining an image corruption measure, such as a local standard deviation to quantify blur. For some or each voxel/pixel in the original image, the image corruption measure is evaluated. If the evaluation yields that there is no corruption, the image value at that voxel/pixel is retained, otherwise it is replaced by an image value at a corresponding voxel/pixel in the estimated image $X_e$.

Optionally, the system IPS may use a feature extraction tool FX that allows image based feature extraction in accordance with the clinical goal the user wishes to achieve. In the cardiac context mainly envisaged herein, the feature extractor FX may include a 3D coronary tree generation module. This component may utilize automatic or semiautomatic algorithms to generate a proposed 3D coronary tree from the full view reconstruction and/or the full set of projection images, knowing that this model tree may be also motion corrupted. Preferably, the feature extraction tool provides an interactive user interface for the user to manually refine the generated 3D coronary tree. The feature extraction tool can use either conventional or spectral data as input.

Optionally, from the full view model vessel tree model, coronary tree centerlines are extracted. The 3D coronary generation module FX can use any existing automatic and interactive centerline extraction tools. The interactive tools can include either "smart" functionalities that are supported by dedicated optimization algorithms to determine an optimal 3D model and/or tree centerlines, based on the user interaction. However, simpler support functionalities are also envisaged that allow interaction with 2D contours of the model or directly on 3D.

In embodiments, one output of this module FX is the coronary tree geometry, preferably including at least the coronary centerlines. In addition or instead, the feature extractor FX may be applied to any of the above imagery the $X_L$, the $X_e$, and Y. The different vessel tree models and centerlines may then be compared. The feature extractor FX may thus support clinical goals such as image-based stenosis measurements, image-based FFT measurements and other.

Reference is now made to Figure 4 which shows a schematic block diagram of a computerized training system TS to train the machine learning component as used in Figure 3. Operation of the system TS is based on training data. Broadly, the training data comprises pairs of historical limited angular re-construction (imagery) $x_L$ associated with corresponding (historic) full re-constructions $x_F$ (imagery). In embodiments, $x_L$ is the training input data and $x_F$ is the target.

An initialized model of the machine learning component, such as a neural-network, processes for each pair, the training input $x_L$ and produces as output an estimate $(\widehat{x_F})$ of the full re-construction. The estimate $(\widehat{x_F})$ is then compared with the associated target $x_f$ from the training pair by means of a loss function $f_L$. The loss function measures an error $\Delta$ between the target and the estimate. An optimization algorithm is then used to update current parameters of the machine learning component, referred to herein as a network parameter NP, to improve, that is, decrease a value of the loss function. For a given pair, the network parameters NP may be iteratively adjusted to improve the loss function. There may be a further iteration loop than runs through all the different pairs in a batch of training data T. The optimization problem will be further discussed below at Fig 6.

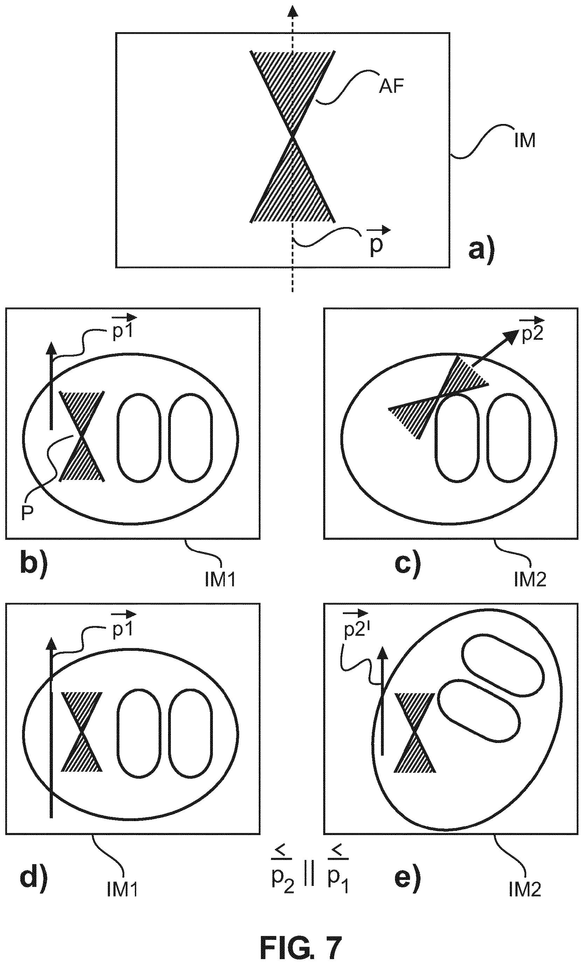

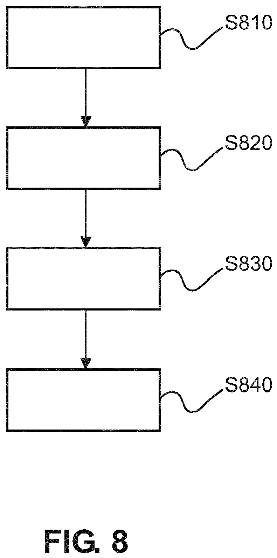

The training imagery may be readily obtained, for example, from existing CT imagery held in image repositories in hospitals, medical centers, etc. Such repositories include in particular PACS, and other databases. If the $x_F$, $x_L$ pairs are not already in storage, but only the $x_F$ are, the set of underlying projections $\pi$ can be used to run an LA-reconstruction, with a random or deterministic sub-selection from the full set. For instance, LA-reconstructions may be formed for any suitable range $\alpha < 180°$, for instance $\alpha = 90°$ or other angular sub-ranges. Preferably, the ranges are centered around a reference angle and so are the respective full projection data sets. Generation of training data will be described in more detail with additional embodiments being discussed further below at Figs 7,8. Once this LA-reconstruction is obtained, it is paired up or associated with $x_F$ to so obtain one pair of the training data described. A scripting tool may be used to automatically pull data from held records to produce the training set. The scripting tool may automatically interface with an LA reconstructor to computed $x_L$, if required.

Optionally, the training system TS includes a feature extractor for training FXT. This is in general different from the above described (see Fig 3) feature extractor FX that is operable during deployment. The feature extractor FXT for training allows a mapping of the input imagery to clinical relevant observables and/or goals. The feature extractor FX allows to focus the machine learning component MLC on clinically relevant aspects of the imagery. For instance, if stenosis is of interest, it may be important that vessel tree segmentations within the imagery are accurately re-constructed so as to enable precise measurements. In embodiments, and as will be expounded upon below in more detail, the machine learning component is implemented by running an optimization algorithm. The optimization algorithm is configured to improve an optimization function, such as the loss function.

If the feature extractor FXT is used, the loss function in the machine learning component examines only the extracted features and the optimization is performed based on the sub-information provided by the feature extractor in training FXT. In other words, the optimization can be configured to pursue the relevant clinical goal. The proposed feature extraction in training FXT is not necessarily tied to the medical realm. Non-medical goals, such as in non-destructive material testing, baggage screening etc., may be suitably formulated in alternative embodiments.

The feature extractor FXT in training allows, first, reducing dimensionality and second, guiding the optimization algorithm in the machine learning component to arrive at imagery that is relevant for a certain clinical goal. It allows avoiding, or at least reducing the likelihood of, the optimization algorithm becoming trapped in local minimum that does not fit well the clinical goal one wishes to achieve.

For instance, the optimization algorithm may focus on image portions that are relevant for the clinical objective. For example, image information not related to the vessel tree image portions, is largely irrelevant when it comes to a stenosis measurement. Because of the dimensional reduction and the better guidance of the optimization algorithm towards a clinical goal of interest, CPU time can be saved. Unnecessarily re-running the algorithm can be avoided and also the processing unit PU implementing the MLC may return results quicker.

Accordingly, especially in cardiac imaging embodiments, the feature extractor FXT may include defining subsets such as in the vessel trees model. Other feature extractors FXT for goals other than stenosis measurements are of course envisaged herein, such as coronary segmentations as such, or flow measurements such as *FFR* (fractional flow reserve) and others.

If the feature extractor FXT in training is used, the loss function $f_L$ does not operate on the training image data, but on medical observables extracted from the training imagery by means of an extractor function $g()$. Formally, this may be written as:

$$x \rightarrow g(x) \rightarrow f_L(\,g(x)\,) = f_L \circ g\,(x), \qquad (1)$$

with *x* a training image. The function $g(\cdot)$ may include taking segmentations and or taking image based measurements on the imagery or on the segmentations as described above. The extractor function may be implemented in software held as a routine in memory MEM or may be implemented in hardware.

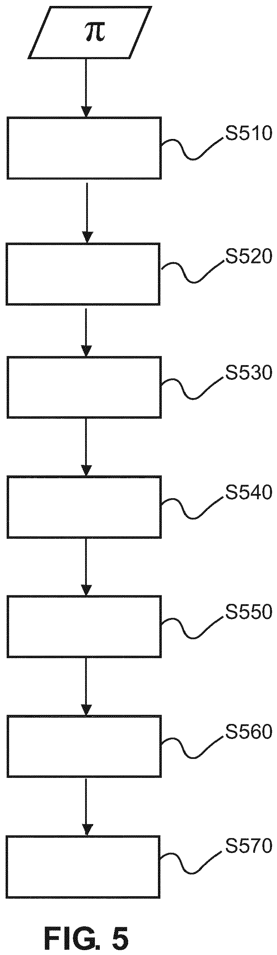

Reference is now made to Figure 5 which shows a flow chart of a method underlying operation of the above described image processing system IPS. However, it will be understood that the following steps are not necessarily tied to the architecture as detailed in the previous Figures 1-4 and that the following steps constitute a teaching in their own right.

At step S510, input data is received, including a set of projection imagery $\pi$, preferably from a full scan of a region of interest.

In embodiments, the input data comprises patient's CT data of the coronary arteries and/or optional additional data including but not limited to acquisition protocol details, demographic data, lab exams results, etc.

The CT data or the projection data can be either conventional polychromatic CT data, spectral CT data acquired with a spectral CT scanner or a photon-counting CT scanner. Preferably, the CT data includes in addition to the full projection data (sinograms) the axial tomographic reconstruction.

In step S520 the full set of projection data $\pi$ is filtered so as to exclude projection images that are corrupted by motion in relation to the region of interest. In embodiments, this filtering, or selection, may be done based on measurement signals obtained from the patient through a probe PR. The measurement signal allows distinguishing between different motion states of the ROI, and these measurements can be correlated with the projection images. The filtering may then be based on this correlation. Alternatively, the filtering may be done purely by image processing techniques, without reliance on measurement signals from a probe. Alternatively still, the filtering may be done by both, image processing and probe measurement signals.

The filtering operation S520 results in a reduced sub-set that represents consistent views on the ROI. The filtering may be explicit post-acquisition or may be done implicit during imaging, such as in gated-imaging.

This reduced sub-set of projection imagery is then received in step S530 at a reconstruction stage and processed there in step S540 by a re-construction algorithm to produce a limited angle re-construction image $X_L$.

The limited angle re-construction image $X_L$ is then processed in step S550 by a pre-trained statistical or machine learning model MLC to produce, based on the angle re-construction image $X_L$ as input, an estimate $X_e$ of a full re-construction.

This estimate is expected to be similar to a full reconstruction obtainable from the full set of projections, but has fewer motion related artifacts. The machine learning step may use, in addition to the image $X_L$ as input data, further data, such as contextual data in relation to the patient (personalization data), the reduced, enlarged or full set of projection images $\pi$, and other.

The estimate $X_e$ may then be displayed, visualized or otherwise processed in step S570.

Advantageously, once trained, the estimation step S550 is usually quicker than running a full reconstruction and the estimate $Xe$ is expected to have fewer or no motion related artifacts as compared to the full reconstruction from the original projection images $\pi$.

Optionally, there is the step of still forming a full reconstruction from the full set as originally received at step S510. The full reconstruction, although expected to include motion artifacts, may still be displayed instead of or alongside the estimate $X_e$. In a further optional step, a combiner step S560, one or more portions of the estimated full re-construction are combined with one or more portions of full re-construction. Specifically, non-motion corrupted portions of the full reconstruction image $X_F$ are maintained, with motion corrupted portions supplanted by corresponding non-motion corrupted portions from the estimate $X_e$.

For present purposes, it is sufficient that the re-construction at step S530 is based on fewer projection images than the full reconstruction used at combiner step S560. In other words, it is not necessarily required in all embodiments that a full re-construction is used for the combination step, although this is preferred. For instance, in embodiments, simply an enlarged set of projections $\pi$ (larger than the reduced set) is used, and not necessarily the complete set of projections.

Reference is now made to Figure 6 which shows a flow diagram of a method for training the machine learning component MLC based on training data. The following is expanding on the explanations above in relation to the training system TS at Fig 4, but, again, the following is not necessarily tied to the training system TS and the following may also be understood as a teaching in its own right.

At step S610, the training data T is provided to train the machine learning components described above, with the components of model suitably initialized. The machine learning model, such as a neural network, may be initialized by populating the weights or other parameter by random or with identical values. A similar initialization may be done for models other than neural network type models. The training data includes, as mentioned above at Fig 4, pairs of LA-reconstructions $x_L$ and their associated full reconstruction $x_F$ as target, and optionally, the underlying set of projections $\pi$. As a further option, some of all of the above mentioned contextual data also forms part of the training data. Including in particular patient data allows for a better level of personalized learning.

In step S620, training input data $x_L$ or $(x_L, \pi)$ (with or without contextual data) is then fed in sequence or in parallel into the respective learning component to obtain training output data $\widehat{x_F}$. An error $\Delta$ between target $x_F$ and output training data $\widehat{x_F}$ is quantified by the loss function $f^L$.

In step S630, an optimization algorithm is then performed to effect the learning by adjusting a current set of model parameters NP, so that the error $\Delta$ is reduced. Specifically, in the optimization algorithm, the parameter(s) *NP* of the initialized model $M^0$ of the machine learning component MLC are adjusted to arrive (possibly after one or more iterations) at the final, fully trained machine leaning component MLC, ready for deployment.

Learning may be a one-off operation or the fully trained machine leaning component MLC may be further trained in one or more additional training phases once new training data becomes available. The MLC components, once trained with sufficient amount of training data, may then be applied in deployment to new input data, that is, data that is not part of the training data.

An assumption underlying machine learning is that there is an unknown, possibly very complex functional relationship F between the space of limited angular reconstructions and the space of full reconstructions. In the learning step S630, parameters NP of the model M are adjusted in an optimization procedure so that the model correctly associates limited angular re-constructions $x_L$ with their corresponding full re-constructions $x_F$. Once sufficiently adjusted, the model represents an approximation of the underlying function F. The learning problem may be formulated as an optimization problem in terms of an objective function. The objective function may be set up as a loss function $f^L$ or utility function. We shall assume herein, that the optimization is in terms of a minimization of the loss or cost function $f^L$, but this is not limiting as the dual reformulation in terms of maximization of a utility function is also envisaged herein in embodiments.

The loss function $f^L$ measures the performance of the model, that is how well training input data is mapped by the model to the target. In general, the model *M* will map the training input $x_L$ to a training output $M(x_L)$, with "$M(x_L)$" denoting the model *M* applied to the training input item $x_L$. The training output does in general differ from the target. Conceptually, a "loss" or "cost" has been incurred because of imperfections in the model. The error can be quantified based on a loss measure $\mu$. More formally:

$$f_L (x_L, x_F) = \mu ( M^{NP}( x_L) - x_F )$$ (2)

$f_L$ is the loss function, a functional that maps into some number. In optimization one wishes to find the best network parameters *NP* such that $f_L$ is a minimum (or at least remains under a quality threshold):

$$arg\ min_{NP} f_L (x_L, x_F)$$ (3)

An optimization algorithm is used to find the ("best") parameters MP that minimize $f^L$ as per (3). The model *M* with the best parameters *NP* then constitutes an approximation of the underlying function *F*. It is not necessarily a global minimum that is found by the optimization algorithm. Finding a local minimum may be sufficient in most cases. Some optimization algorithms are iterative. The optimization algorithm may not necessarily be run until full convergence to the global or local minimum, but iterations may be stopped once a proximity threshold is respected. Alternatively, iterations may be aborted earlier still, for example after a number of fixed iteration cycles, or as otherwise required and requested.

Measures $\mu$ envisaged herein include a Euclidean square distance to implement a least squares approach, in which case optimization problem, (3) may be formulated as:

$$arg\ \min_{NP} \sum_{\{x_L, x_f\}} (M^{NP}(X_L) - x_F)^2$$ (3a)

Alternatively, $\mu$ may be formed in terms of root mean square error. In further alternatives, any suitable $L^p$ norm, with *p* other than 2 is also envisaged in embodiments for $\mu$. Other suitable measures $\mu$ envisaged include Kullback-Leibler divergence (KBD), specifically cross-entropy, binary cross entropy. In yet a further embodiment, the measure $\mu$ is formulated in terms of the *F1*-score. Numerous other suitable measures may be used. For solving (3), that is, for finding of suitable model parameters NP that minimizes or reduces $f^L$ under a quality threshold, a number of different optimization algorithms may be used, such as gradient descent method, the conjugate gradient descent methods, stochastic gradient descent methods, the BFGS (Broyden-Fletcher-Goldfarb-Shannon) method, the Nelder-Mead method, Newton-Raphson algorithms and others. Depending which type of optimization method is used, the network update during the iterations may differ. For instance, if the chosen machine learning ("ML") model *M* is of the neural network type ("NN"), the gradient descent method may be used. In this case, the gradient descent approach can be formulated as the backward-propagation algorithm. In the NN embodiment, the network parameters include nodal weights which are adjusted by the backward-propagation algorithm: the training input data is repeatedly forward propagated through the network in iteration cycles, whilst the error incurred are backward propagated into the NN model to adjust nodal weights in proportion to how these nodes contributed to the error.

Suitable models *M* envisaged herein for the machine learning component include the mentioned NN type architectures, such as fully connected neural or not-fully connected networks, such as convolutional neural networks (CNN), or hybrids thereof. Other ML models envisaged herein includes the support vector machines, decision trees, regression methods, all envisaged herein in alternative embodiments. More specifically, model M for the machine learning component includes any one or a combination of the following: K-nearest neighbor regression models, Feed Forward Deep-convolutional neural network, recurrent NNs, *"U-Net"* architectures (to be explained in more detail below at Fig 6) of Deep-convolutional neural network, Generative adversarial Deep-convolutional neural network ("GAN"), and others.

The proposed system has been observed to yield good results if a deep learning architecture is used. The concept of deep learning is applicable not only to neural-networks but to other alternative network type machine learning architectures. In a feed forward artificial neural-network as mentioned above, the depth corresponds to the number of hidden layers between the input and output layer. However, in other networks this correspondence may not be necessarily so. A general concept of network depth can be defined in terms of causal paths through the network that links a given final output to an initial input. The path describes all the processing nodes that contributed to the observed output. A length for these paths can be defined by the number of nodes through which the path passes. It can thus be assumed for instance that a recurrent network, may in fact be deeper than a feed forward network with more hidden layers. This is because in the recurrent network the depth is defined by the number of times the path transverses the network structure to produce the output and not only by the number of hidden layers. In other words, the recurring network with fewer hidden layers may be deeper than a feed forward network with more hidden layers. The depth is measured as the maximum causal path length ("PL_max") for instance, or in any other metric in terms of path length. A depth (as measured in a suitable causal path length such as PL_max) of two has been found to yield good results but other, deeper architectures, such as any one of 3, 4, 5, 6, 7,8, 9 or 10 or more than 10 are also envisaged herein. In some embodiments, the depth is in the tens or in the hundreds, although the depth must be traded off against the responsiveness when deployed and during learning. CNNs with depths of around 10 have been found to yield, for present purposes, accurate results with quick turnaround during deployment, with next to quasi-real-time performance. Depending or the hardware and load, a performance in the order of milliseconds may be achieved during deployment, in particular in forward-propagation through a neural network structure.

Broadly, the machine learning component MLC, when arranged as a neural-network, comprises a plurality of processing nodes sometimes referred to as "neurons" that can be thought to be organized in a cascaded fashion in a plurality layers arranged between an input layer or input interface and an output layer or output interface. However, this is not necessarily spatial as the arrangement in layers of the nodes relates foremost to the manner of interconnectedness between the nodes and hence to the manner of data flow between the nodes. The architecture of the neural-network may be arranged as a suitable data structure such as, two or higher dimensional matrices arranged using for instance pointer structures or otherwise to implement the interconnections between the layers.

The machine learning component MLC may be held in a suitable memory MEM. Operation of the network in deployment may be beneficial implemented by a computational processing unit such as a dedicated micro-processor. Preferably but not necessarily the processor PU is arranged for parallel computing. In embodiments a multi-core design is used. In particular, graphical processing units GPU's or more recently TPU's can be used with benefit for calculations involved in neural-networks. The machine learning component MLC in neural-network structure is defined by a potentially very large number of network parameters that define a configuration of the network NN.

CNN models have been found to yield good results and are envisaged herein in embodiments. CNN-architectures may include nodal layers configured as functional units of different types, including not-fully connected layers, called convolutional layers that operate on intermediate outputs from previous layers in a convolution-like manner. Other layer types include activation layers that introduce non-linearities to reduce tendencies towards overfitting. Other layers include deconvolution layers that approximate a quasi-inverse of a convolutional layer, and pooling layers to reduce the size of layers, drop-out layers reduce overfitting tendencies, and fully connected layers, and others as have been described elsewhere. The CNN embodiments envisaged herein include any combination of the mentioned layer types. The convolutional layers of stride large than one can be used to reduce size of the output compared to input, so can act as downsampler layers. Upsampling layers may also be formed to increase the size of output compared to input. In embodiments, the input and output data may be arranged as vectors or matrices for of two or higher dimensions. Changing the size as envisaged in the context of CNNs as described then amounts to changing the number data items along at least one of the dimensions.

In one CNN embodiment, the network comprises two processing strands, one down-sampling ("DS") strand and one up-sampling ("US") strand, the stands arranged in sequence, the US downstream of the DS. A reversed arrangement may also be envisaged in alternative embodiments. Broadly, in the down sampling strand, the data dimension of the input image data is gradually reduced by one or more down-sampling layers. This allows achieving a low dimensional representation of the image data to better combat undesirable over fitting effects. In the subsequent up sampling strand, up-sampling layers are used to up - sample the data dimension to rematch, in embodiments, with the dimension of the global input image data as received at the input layer.

The down sampling strand may include one or more down sampling layers arranged in sequence some or each having its activation layer. The down sampling layers may be implemented as convolutional layers with stride larger than one and/or by using one or more pooling layers. The pooling layer, if any, may be combined with an associated convolutional layer which may or may not have stride larger than one.

At the last layer of the down sampling strand, the emerging intermediate output is then fed into the up sampling strand. As mentioned, the up sampling strand is constructed from a sequence of (one or more) up-sampling layers. The number of up sampling layers in general matches the number of down sampling layers in the down sampling strand in order to achieve the same dimension at the global output. However, this may not be necessarily so in all embodiments where the dimension of the output at the up-sampling strand differs from the dimension as received at the input layer. The up sampling layer may be arranged as de-convolutional layers, or as interpolating layers, some or each having attached an activation layer. In embodiments (further) respective convolutional layers are combined with the up sampling layers, optionally with an activation layer interposed. Specifically, in embodiments, a "*U-net*" architecture is used. U-net networks have been described for instance by O. Ronneberger et al in "U-Net: Convolutional Networks for Biomedical Image Segmentation", published in Navab N. et al (Eds) "Medical Image Computing and Computer-Assisted Intervention - MICCAI 2015, MICCAI 2015. Lecture Notes in Computer Science", Springer, Vol 9351, pp 234-241.

As mentioned above at Fig 4 in connection with functional expression (1), in one embodiment a feature extractor function in training FXT may be implemented by extractor function $g$ combined with the loss function $f_L$ to map in step S630 the training imagery down into a lower dimensional feature space (preferably on the 1D space of real number) to so quantify the learning error in terms of clinical goals or observables and hence guide the optimization to clinical observables of interest. The dimensional reduction by extractor functional into feature space allows faster computation and fosters finding local minima that better reflect the clinical task at hand. In other words, the loss function FL in this embodiment does not operate the images as such but only observe on the measurable observables taken and extracted by the extractor functional FX from the imagery. Although a loss function $f_L$ as such also constitutes dimensional reduction in terms of a number, the proposed approach in combination with extractor functional $g$ is not a mere dimensional reduction as such, but a technical dimensional reduction into the space of clinical observables.

In detail in this embodiment the above described learning algorithm may now be written as:

$$arg\ min\ _{NP}\ f_L\ ^\circ\ g\ (x_L, x_F) \tag{3b}$$

where extractor functional $g$ maps the imagery to clinical observables / goals and the loss function $f_L$ then operates on thereon.

The extractor functional $g(\cdot)$ may also be conceptualized to represent a regularization step where the optimization algorithm is guided towards a local and global minima that better represent the clinical object one wishes to achieve. This avoids the optimization algorithm to get trapped in minima that relate to features not of interest. In particular, the functional may act to define sub-portions of the imagery such as in segmentations and focuses on observables concentrated and supported only by those sub-sets. This is the case for instance for stenosis FFT measurements where the functional $g$ of the extractor FXT allows focusing on the segmentations only rather than the whole image. Therefore, different clinical observables or goals may call for different extractor functions and/or loss functions.

The following embodiments of loss functions $f_L$ are envisaged herein in connection with the feature extractor functional $g$. Generally, what is proposed herein is to combine, specifically to functionally compose "$\circ$", a suitable loss function with the extractor functional $g$, to so form a clinically meaningful loss function, $f_L \circ g$. The so combined loss function is configured to allow solving for an optimization where the objective is to reduce the error $\Delta$ between the clinical outcome as decided based on the target full-view images $x_F$ and clinical outcome based on the images $M(x_L)$ estimated by the model $M$. Exemplary embodiments for the loss function $f_L$ in connection with clinical goals/observables as per $g$, include but are not limited to:

In one embodiment, the dice loss function (*F1*-score loss function) is used as the loss function $f_L$ to quantify the error $\Delta$ between the coronary segmentation computed from the full view images and the segmentation computed from the images estimated by the model M. In this embodiment, $g$ is a segmentation function to segment for vessel trees. The vessel tree segmentations form sub-sets and the *F1*-score based loss function measures how these sub-sets differ.

In other embodiments, the squared difference (akin to eq (3a)) loss function is used to quantify the error $\Delta$ between stenosis percentage calculated with the full view images and stenosis percentage calculated with the images estimated by the model M. In this embodiment, the extractor functional g maps segmentations into stenosis percentage. In other embodiments, the squared error or root mean squared error is used as the loss function $fL$ to measure the error $\Delta$ between an FFR value (e.g., CT-FFR) calculated based on the full view images and the FFR value (e.g., CT-FFR) calculated based on the images as estimated by the model M. In this embodiment, the extractor functional g maps segmentations into FFR values.

A combination of multiple loss functions and or extractor functional $g$ are also envisaged.

Although in the above emphasis has been placed on x-ray imaging other tomographic modalities such as MIR, PET, SPECT, US and others are particularly included herein.

Also, as will be appreciated, the above principles can be applied to regions of interest other than the human heart or coronaries such as chest imaging, liver imaging, etc.

It will be understood, that images reconstructed with partial-angle tomography XL as referred to above may be any one of straight multi-planar reformatted image, a cross-sectional imager perpendicular to Z, or the whole or a part of a 3D volume, along Z or reformatted (along another view axis). In embodiments, the volume is reformatted along a vessel centerline of interest to achieve more accurate results due to focus on an image subregion.

The MLC may be operated centrally or as a distributed computational network, either during deployment or training. The computational burden is shared across a network of interconnected computing units. (Federated) Cloud architecture may be used with benefit in these types of embodiments. This distributed approach may be used with benefit for hybrid networks, with fully connected and CNN-type subnetworks, where the subnetworks are implemented by different computing units (e.g., servers) in the Cloud, possibly remote to each other, but communicatively coupled to provide or receive input or output, respectively, among and from each other. Central processing on a central server is also envisaged in alternative embodiments.

It will be understood that the ML components and/or its training system TS may be implemented suitably by processing units PU such as GPU or others. GPU's (graphical processing unit) or TPU's (tensor processing units) are optimized to perform tensor or matrix operations (which are series of dot products). It has been found that tensor or matrix operations can be used with benefit for training or deployment. GPUs, TPUs or similar microprocessors are in general optimized for parallel computing, such as in multi-core systems.

Suitable circuitry to implement the above described systems IPS in software arranged on a computing device such as a stationary computer, a workstation, for instance a laptop, handheld device, tablet or others.

The proposed deployment and/or training may also be implemented in a client-server based environment. In particular, the training or deployment may be performed by one or more servers in a cloud based architecture.

In addition to software based circuitry the systems for deployment or training as described above may also be implemented as hard coded micro-chips. Specific circuity such as application specific integrated circuitry ASICS Circuitry may be used. A system-on-a-chip (SOC) may include discrete and/or integrated circuitry, and combinations thereof. In an alternative embodiment, the circuity may include suitably configured field-programmable gate array FGPA's. In particular, the described imaging support system SSI may be integrated at least in part into the controller CC of the imaging apparatus or maybe otherwise integrated into the imaging apparatus. The system SSI may be integrated into a workstation or other computer unit associated with the imaging apparatus.

The trained MLC may be held in a central memory MEM or may be distributed in a plurality of servers or memory devices preferably connectable to an end user computing device (laptops, smart phone, desktop computer, etc.) to request execution of the training and/or deployment according to any one of the above described systems.

Training and deployment may be run on the hardware equipment, or may be run on different computing hardware. Preferably, the hardware for the training is configured for higher performance than for deployment as training may be computational more demanding. Although training may be a one-off operation initially, it may be repeated with new training data. The machine learning component MLC may be switchable into training or deployment mode.

Before turning now in more detail to embodiments for generating training data pairs ($x_{LXF}$), reference is first made to Fig 7. This shows schematically certain artifacts AR that can be frequently incurred in reconstruction imagery when performing a limited angle reconstruction as described above in embodiments. The structure of some such artifacts AF admit definition of a longitudinal axis in a direction $\vec{p}$ as shown in image plane IM. In embodiments, the artifacts are elongate. More particularly, an artifact may present as a longitudinal section through a double cone and may hence have an hour-glass shape as schematically shown. However, such elongated artifacts with longitudinal axis as shown in Figure 7a are merely an exemplary embodiment, and the below is also applicable to artifacts other than the one sketched in Fig 7a, in particular to artifacts that are not necessarily elongated in structure. As can further be seen, the artifact is located at certain position in the image plane IM.

As explained above at Fig 4 and step S610 of Fig 6, training data may be obtained from historical reconstructions and their projection data as held in medical data records such as PACS and others. A set of historical data may include, for a given patient or record i, the limited angle reconstruction image $x_L^i$, the limited set of projection data $\pi_L^i$ from which $x_L^i$ has been reconstructed. In some cases there is also the full set of projection data $\pi_F^i \supset \pi_L^i$, being a super set of $\pi_L^i$ and acquired in an acquisition orbit subtending at least 180°.

Each set of limited angle projection data $\pi_L^i$ for a given patient *i* covers a range less than 180° in parallel beam-geometry or less than 180°+fan-angle in divergent beam geometry, with a certain starting angle $\alpha^i$. The respective starting angles $\alpha^i$ will be different for different patient records, because the historical limited angle projections $\pi_L^i$ may have been obtained through vital sign gating, such as ECG-based gating for cardiac imaging. It is also likely that the respective end angle $b^i$ differ from record to record, and so may be the range covered $c^i$. That is, $\alpha^i$, $\beta^i$ and $c^i$ may be completely arbitrary and random across historical records *i*. Although the respective angular coverage $C^i$ of the full set $\pi_F^i$ may in general be 180° in parallel beam-geometry or less than 180°+fan-angle in divergent beam geometry, the location of $C^i$'s start angle $\gamma^i < \alpha^i$ and end angle $\delta^i > \beta^i$ may also differ from record to record.

The reconstruction algorithm that was applied to reconstruct $x_L$, uses this angular range information $c^i=[\alpha^i,\beta^i]$ associated with the limited angle projections $\pi_L^i$. The situation is shown schematically in Figures 7b, c. Respective limited angle reconstructions IM1 and IM2 are shown in panes b) and c), respectively. The imagery represents schematically, and by example only, lung images reconstructed in a transversal plane.

The starting and end angles of the respective angular reconstruction ranges from which IM1, IM2 have been reconstructed are different and this results in the respective limited angle artifacts showing up at different angular positions in the respective image planes. In addition or instead, respective orientations $\vec{p_1}$ and $\vec{p_2}$ of the artifacts are different in both images, again because of the different starting angles.

Applicant has found that using such imagery including artifacts in different positions and/or orientations as training input data to train the above described machine learning component may result in sub-optimal training results. That is because the different orientations and/or angular positions of the artifacts in the image planes are irrelevant information for present purposes and may not allow the machine learning component to generalize well. There is the danger of over-fitting and the machine learning prototype may need to be trained with an inordinately large number of training data in order to generalize well for all the random directions or positions of the various artifacts that may be present in the training imagery.

It is therefore proposed herein to pre-process the historical image data in that a common angular position $\alpha_0$ is defined around which all angular ranges of $\pi_L^i$ are centered for some or all i. Preferably it is also the respective full angular ranges $\pi_F^i$ that are so centered around the common angular position $\alpha_0$.

The new, now centered, angular ranges may be written as$[\alpha^{\prime i},...\alpha_0..., \beta^{\prime i}]$ for with $\alpha_0-\Delta = \alpha^i$, $\alpha_0 + \Delta = \beta^i$ for some, but preferably, all sets i. In other words, the individual projection images in each data set $\pi^i$ are now reassigned, in their original order, with respective new angular positions in the new range centered on the common reference angle $\alpha_0$. The respective full ranges $[\gamma^i,\delta^i]$ are equally so centered around $\alpha_0$, $[\gamma^{\prime i}....\alpha_0..., \delta^{\prime i}]$, $\alpha_0-\Delta' = \gamma^{i\prime}$, $\alpha_0 + \Delta' = \delta^{i\prime}$, for some or all i. Because of the centering as proposed herein, the respective angular coverages $c^i$, $C^i$ in the historical projections are not required to be same throughout the historical records i.

The reconstructions for the so centered projections $\pi_F^i$, $\pi_L^i$ are then re-run using a standard reconstruction scheme such as forward backward projection (FBP), or using a reconstruction scheme geared towards limited angle tomography including a regularizer term as mentioned above. This additional re-running of reconstructions this time based on the centered projections for some or all the intended training input imagery may then result in new training imagery as shown in Figures 7d, e.

The anatomies now appear rotated in the reconstruction plane, but the artifacts AF now appear at the same angular position in the image planes and/or are now aligned along a common axis. In the example shown, direction $\overrightarrow{p_1}$ is as before, but $\overrightarrow{p_2}$ is rotated into an orientation $\overrightarrow{p_2}'$ parallel to $\overrightarrow{p1}$. In this case, the common angular position in IM1 was used as reference. However, the common angular position can be chosen arbitrary, and is not necessarily based on one of the historical images, in which case all images IM1, IM2 will appear rotated relative to each other.

Reference is now made to Figure 8, where a flow chart is shown of the proposed method for generating training data for the machine learning component.

The proposed method of generating the training data has been found to be of particular benefit for neural-network type machine learning models, in particular those of the convolutional network type with one or more hidden layers, in particular convolutional layers, as explained above.

When applying the proposed method for generating input training data the newly reconstructed limited angle training imagery $x_L$ will have artifacts AF aligned along a common axis and/or the artifacts in the respective image planes may be found at the same angular position $\alpha_0$ throughout the corpus. The so reconstructed input imagery with aligned artifacts may then be used as the limited angle $x_L$ input data for the training phase and can be processed as described above in Figure 6 in particular. The respective targets $x_F$ target associated with the artifact-aligned training input imagery $x_L$ are the reconstructions obtained from the $\alpha_0$- centered full projections.

The proposed training data preprocessing method may be implemented on the training system TS using re-constructor RECON or RECON_L, and a reassignor module RM that performs the described re-assignment of the historical projection data to effect the centering around the common angular position $\alpha_0$. The re-assigner RM then feeds the so reassigned projection data for each item i in the historical training data into the reconstruction unit RECON/RECON_L to obtain the artifact-aligned new training data pair $(x_L, x_F)$.

With continued reference to Figure 8, the method may include a step S810 for receiving historical projection data, one being a superset of the other. The superset has preferably the full range (at least 180°) for a given patient, and the smaller subset, may be a sub-selection obtained by gating of instance or by any other sub-selection mechanism from the superset. The historical projection image data may be retrieved from a medical data record or other memory.

At step S820 the two projection data sets are centered around a predefined common angular position. The common angular position is chosen for instance by the user. The centering operation may include reassigning individual projection images to new angular values.

In step S830 each of the now commonly centered projection data is then fed into a reconstruction algorithm to obtain, respectively, a newly reconstructed limited angle $x_L$ image and a full reconstruction image $x_F$. These two images, for a given patient, form a pair of training images.

The steps S810-S830 may then be repeated for a plurality of patient projection images for different patients or different records, to so obtain a plurality of pairs $(x_L\ x_F)^i$. As mentioned above in relation to Fig 7, some or all of the limited angle reconstructions $x_L^i$ across the records i maybe rotated against each, due to the centering operation S820.

At step S840 the so obtained pairs are the provided as training images to the computerized training system TS as described above to train the machine learning model prototype. For each pair, the preprocessed limited angle reconstruction image $x_L$ is a training input image and the full $x_F$ image in the pair is the associated target. More generally, the training input data may be input during the training phase into the machine learning prototype to adjust the model parameters as described above.

The proposed method of training data generation makes the training algorithm robust or invariant against arbitrary locations and/or orientations of image artifacts.

An effect of the described preprocessing is that the so trained machine learning component may output the final reconstructions during deployment in a rotated frame because of the rotated training data. This may be undesirable. To address this the following post processing steps may be performed on the final reconstruction as output by the fully trained machine learning component MLC during deployment. In embodiments, the output reconstruction $X_F$ may simply be rotated back by image processing. However, this may not always be desirable as this may lead to a loss of resolution. Alternatively, the display device may be rotated.

In a further embodiment, an additional image post processing scheme is applied as described now. In this embodiment, synthetic projections are produced by forward projection onto the projection domain, through the rotated reconstruction $X_F$. The forward projection operation is restricted to angular ranges outside the centered common range for the limited angle projections. In other words, the forward projections are performed for the angular compliment of the centered range $[\alpha^i, \beta^i]$. In this manner, a now completed $180^0$-set of projection data is obtained by combining the original projection data from the limited reconstruction range and the newly synthesized projections obtained through forward projection. An additional reconstruction is then performed based on this combined set of projections to obtain an artifact free image as final output as before, but his time in a non-rotated standard representation.

The prosed preprocessing method applicable to parallel beam CT, fan-beam CT, Cone-Beam CT and C-arm CT. The different system trajectories lead to different angular positions of the missing data, which is compensated by the proposed method.

It will be understood, that for diverging beams, such in cone beam or fan beam, the above used ranges include the fan angle.

In another exemplary embodiment of the present invention, a computer program or a computer program element is provided that is characterized by being adapted to execute the method steps of the methods according to any one of the preceding embodiments, on an appropriate computerized system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (transitory or non-transitory), such as an optical storage medium or a solid-state medium supplied together with or as part of other hardware, but may also be distributed in other forms, such as via the internet or other wired or wireless (tele-)communication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. An image processing system (IPS), comprising:

   an input interface (IN) for receiving a set of one or more projection images with at least one motion corrupted projection image excluded;
   a reconstructor (RECON) configured to reconstruct a first image from the set; and
   a pre-trained machine learning component (MLC) configured to estimate a second image from the first image.

2. System of claim 1, comprising an image combiner (COMB) configured to combine one or more portions from the second image with one or more portions from an image reconstructable from a super-set comprising the set and the at least one excluded projection image, to obtain a combined image.

3. System of any one of the previous claims, comprising a visualizer (VIZ) configured to effect displaying, on a display device (DD), the second image or the combined image.

4. System of any one of the previous claims, wherein the machine learning component is based on a pre-trained neural network.

5. System of any one of the previous claims, comprising an image selector module (ISM) configured to select the first set of projection images from the, or a, super-set of projection images, based on an indication for motion corruption.

6. An image processing method, comprising:

   receiving (S530) a set of one or more projection images with at least one motion corrupted projection image excluded,
   reconstructing (S540) a first image from the set; and
   operating (S550) a machine learning algorithm to estimate a second image from the first image.

7. Method of claim 6, comprising: combining (S560) one or more portions from the second image with one or more portions from an image reconstructable from a super-set comprising the set and the at least one excluded projection image, to obtain a combined image.

8. Method for training a machine learning component (MLC) so that the component (MLC), when so trained, is capable of estimating a second image from a first image, the first image reconstructed from a set of at least one projection images with at least one motion corrupted projection excluded.

9. Method for training a machine learning component (MLC), wherein the method is based on improving an objective function, the method comprising:

   applying (S620) training data to a machine learning component prototype to obtain training output data; and
   mapping (S630) by an information extractor function the training output data to one or more values, wherein the objective function is applied to said one or more values.

10. Method of claim 10, wherein the one or more values represent a clinical objective in relation to the second image.

11. Method of generating training data for a machine-learning component, comprising associating a full reconstruction image ($x_F$) of an object based on a first set of projection images, with a limited-angle reconstruction image ($x_L$) of the same object based on a subset of said first set.

**12.** Method of generating training data for a machine-learning component, comprising:

receiving (S810) at least two sets of projection data associated with respective angular ranges, one range being a subset of the other range;
centering (S820) the two sets of projection data on a common, predefined reference angular position, to so obtain centered projection data sets;
reconstructing (S830) respective images from the two centered projection data sets; and
providing (S840) the respective images as an item of training data.

**13.** At least one computer program element, which, when being executed by at least one processing unit (PU), is adapted to cause the processing unit (PU) to perform a method as per any one claim 6-12.

**14.** Program element of claim 13, wherein the at least one processing unit (PU) is of a multi-core design and/or configured for parallel computing.

**15.** At least one computer readable medium having stored thereon the program element of claim 14.

**FIG. 1**

**FIG. 2**

FIG. 3

FIG. 4

FIG. 5

S610

S620

S630

**FIG. 6**

AF

IM

$\vec{p}$

a)

$\vec{p1}$

P

b)

IM1

$\vec{p2}$

c)

IM2

$\vec{p1}$

d)

IM1

$\vec{p2'}$

$\frac{<}{p_2} \parallel \frac{<}{p_1}$

e)

IM2

FIG. 7

**FIG. 8**

Europäisches
Patentamt

European
Patent Office

Office européen
des brevets

# EUROPEAN SEARCH REPORT

Application Number

EP 18 21 1630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GE WANG: "A Perspective on Deep Imaging", IEEE ACCESS, vol. 4, 1 January 2016 (2016-01-01), pages 8914-8924, XP055451413, USA ISSN: 2169-3536, DOI: 10.1109/ACCESS.2016.2624938 * abstract * * page 8917, left-hand column, last paragraph - page 8917, right-hand column, paragraph first * | 1-15 | INV. G06T11/00 |
| X | WO 2018/119366 A1 (HEARTFLOW INC [US]) 28 June 2018 (2018-06-28) * abstract * * figures 2A, 2B * * paragraph [0037] - paragraph [0047] * | 1,6, 13-15 | |
| X | JOYONI DEY ET AL: "Impact of variability in respiration on estimation and correction of respiratory motion of the heart in SPECT", NUCLEAR SCIENCE SYMPOSIUM CONFERENCE RECORD, 2007. NSS '07. IEEE, IEEE, PI, 1 October 2007 (2007-10-01), pages 4503-4509, XP031206586, ISBN: 978-1-4244-0922-8 * abstract * * Section II.A * * Section III * | 1,6, 13-15 | TECHNICAL FIELDS SEARCHED (IPC) G06T |
| A | US 2011/033097 A1 (BRUDER HERBERT [DE] ET AL) 10 February 2011 (2011-02-10) * the whole document * | 1-15 | |

-/--

The present search report has been drawn up for all claims

| Place of search | Date of completion of the search | Examiner |
|---|---|---|
| Munich | 27 May 2019 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANIRUDH RUSHIL ET AL: "Lose the Views: Limited Angle CT Reconstruction via Implicit Sinogram Completion", 2018 IEEE/CVF CONFERENCE ON COMPUTER VISION AND PATTERN RECOGNITION, IEEE, 18 June 2018 (2018-06-18), pages 6343-6352, XP033473551, DOI: 10.1109/CVPR.2018.00664 [retrieved on 2018-12-14] * the whole document * | 1-15 | |
| A | US 2017/362585 A1 (WANG GE [US] ET AL) 21 December 2017 (2017-12-21) * the whole document * | 1-15 | |

TECHNICAL FIELDS
SEARCHED    (IPC)

The present search report has been drawn up for all claims

| Place of search | Date of completion of the search | Examiner |
|---|---|---|
| Munich | 27 May 2019 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 1630

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2019

| Patent document cited in search report | | Publication date | Patent family member(s) | | Publication date |
|---|---|---|---|---|---|
| WO 2018119366 | A1 | 28-06-2018 | US<br>WO | 2018182096 A1<br>2018119366 A1 | 28-06-2018<br>28-06-2018 |
| US 2011033097 | A1 | 10-02-2011 | CN<br>DE<br>US | 101991428 A<br>102009036232 A1<br>2011033097 A1 | 30-03-2011<br>17-02-2011<br>10-02-2011 |
| US 2017362585 | A1 | 21-12-2017 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. J. L. MURRAY ; GBD.** Global, regional, and national age-sex specific all-cause and cause-specific mortality for 240 causes of death, 1990-2013: a systematic analysis for the Global Burden of Disease Study 2013. *Mortality and Causes of Death Collaborators,* 2015
- *The Lancet,* 2015, vol. 385 (9963), 117-171
- **T. M. MITCHELL.** Machine Learning. McGraw-Hill, 1997, 2
- **O. RONNEBERGER et al.** Medical Image Computing and Computer-Assisted Intervention - MICCAI 2015. *U-Net: Convolutional Networks for Biomedical Image Segmentation,* 2015
- Lecture Notes in Computer Science. Springer, vol. 9351, 234-241